Europäisches Patentamt

European Patent Office

Office européen des brevets

(19)

(11) Numéro de publication : **0 097 562**
**B1**

(12) **FASCICULE DE BREVET EUROPÉEN**

(45) Date de publication du fascicule du brevet :
06.05.87

(51) Int. Cl.⁴ : **B 25 J 11/00**

(21) Numéro de dépôt : **83401150.4**

(22) Date de dépôt : **07.06.83**

(54) Dispositif de transfert télescopique en particulier pour robots industriels.

(30) Priorité : **17.06.82 FR 8210619**

(43) Date de publication de la demande :
**04.01.84 Bulletin 84/01**

(45) Mention de la délivrance du brevet :
**06.05.87 Bulletin 87/19**

(84) Etats contractants désignés :
**BE CH DE GB IT LI NL SE**

(56) Documents cités :
**EP-A- 0 050 561**
**FR-A- 1 191 667**
**FR-A- 1 367 849**
**FR-A- 2 134 034**
**FR-A- 2 187 071**
**FR-A- 2 449 515**
**GB-A-   802 506**

(73) Titulaire : **ALBORA S.A.**
**133, avenue Léon Blum B.P. 184 Centre de Tri**
**F-38042 Grenoble Cedex (FR)**

(72) Inventeur : **Poncet, Jean-Pierre**
**Saint-Nazaire les Eymes**
**F-38330 Saint Ismier (FR)**

(74) Mandataire : **Lerner, François**
**5, rue Jules Lefebvre**
**F-75009 Paris (FR)**

## Description

La présente invention a pour objet un dispositif de transfert télescopique en particulier pour robots industriels.

Les robots industriels prennent de plus en plus d'importance et de développement dans l'industrie. L'un des éléments de base entrant dans la construction de tels robots est un dispositif de transfert télescopique permettant un mouvement de translation linéaire. Par l'utilisation de plusieurs dispositifs de ce type disposés angulairement différemment, il est possible de réaliser n'importe quel mouvement de déplacement, par exemple d'un objet d'un endroit à un autre. En outre, si le dispositif de transfert télescopique autorise une rotation sur lui-même autour de son axe, la liberté des mouvements de déplacement est encore accrue, ainsi donc que l'agilité du robot.

L'objet de l'invention est un tel dispositif de transfert télescopique pouvant constituer un élément de base d'un robot industriel et qui présente de grands avantages au niveau de la fiabilité du dispositif, de la précision de la commande de déplacement, aussi bien en translation qu'en rotation, de la simplicité d'exécution et de l'économie de réalisation correspondante. En outre, le dispositif est extrêmement compact, et son usage est particulièrement pratique, compte tenu en particulier de ce que la plupart des alimentations électriques et/ou pneumatiques de commande de la tête de robot montée à l'extrémité du bras télescopique seront logées à l'intérieur du dispositif. Il permet d'obtenir une grande course et une grande vitesse de déplacement de l'extrémité mobile du bras et permet une programmation aisée des mouvements exécutés.

Selon le document FR-A-1 367 849, on connaît un dispositif de transfert télescopique en particulier pour robots manipulateurs comprenant au moins deux organes tubulaires coulissant télescopiquement l'un par rapport à l'autre, des moyens de commande moteur du dispositif comprenant au moins un moteur servant à commander le mouvement alternatif de déplacement parallèlement à l'axe médian desdits organes tubulaires, dans un sens ou dans l'autre, de l'un desdits organes tubulaires et des moyens tels que câbles montés libres reliés en un point fixe du support du dispositif assurant le couplage desdits organes tubulaires entre eux de façon que lorsque le premier organe est entraîné par le moteur sur une distance d par rapport audit support fixe, ledit second organe est entraîné dans la même direction d'une même distance d par rapport audit premier organe, ledit deuxième organe télescopique coulissant à l'intérieur du premier organe télescopique en étant guidé au moyen de roulements montés à l'intérieur du premier organe télescopique et roulant sur des pistes. Ce document a servi de base pour l'élaboration du préambule de la revendication 1.

Mais tel qu'il est conçu, ce dispositif ne prévoit aucun moyen particulier pour l'actionnement de l'instrument de manipulation situé à l'extrémité du bras. D'autre part, la réalisation ne peut fonctionner qu'en position verticale, le moteur d'actionnement du dispositif télescopique ne fonctionnant qu'en dispositif de levage.

Selon le document EP-A-0 050 561 on connaît un télémanipulateur dans lequel la tête de manipulation est reliée par des flexibles à une source d'alimentation de puissance.

Le dispositif de transfert télescopique, en particulier pour robots industriels conforme à l'invention comprend au moins deux organes tubulaires coulissant télescopiquement l'un par rapport à l'autre, des moyens de commande moteur du dispositif comprenant au moins un moteur servant à commander le mouvement alternatif de déplacement parallèlement à l'axe médian desdits organes tubulaires, dans un sens ou dans l'autre, de l'un desdits organes tubulaires, et des moyens tels que poulies, courroies, câbles, engrenages, montés libres ou fous, reliés en un point fixe du support du dispositif, assurant le couplage desdits organes tubulaires entre eux de façon que lorsque le premier organe est entraîné par le moteur précité sur une distance d par rapport au support fixe, ledit second organe est entraîné dans la même direction d'une même distance d par rapport audit premier organe, ledit deuxième organe télescopique coulissant à l'intérieur du premier organe télescopique en étant guidé au moyen de galets montés à l'intérieur du premier organe télescopique et roulant sur des pistes, ce dispositif se caractérisant en ce que :

les pistes sont formées par des méplats ménagés sur la paroi extérieure dudit deuxième organe tubulaire,

ladite commande du mouvement de déplacement se fait de manière positive dans un sens et dans l'autre,

les moyens de commande électriques et/ou pneumatiques commandés à partir de l'extrémité dudit deuxième organe tubulaire sont alimentés par des conduites souples passant à l'intérieur dudit deuxième organe tubulaire et à l'extérieur dudit premier organe tubulaire en étant fixées en leur point d'alimentation au support du dispositif vers sa base et en passant à l'autre extrémité dudit premier organe tubulaire sur des poulies de renvoi ou analogues ;

et ledit premier organe tubulaire est monté tournant dans des paliers de rotation liés audit support.

Par cette combinaison de moyens et compte tenu de ces dispositions relatives adoptées, on obtient, en particulier, les avantages suivants :

on peut commander de façon précise une course de longueur 2d à partir d'une commande de course positive d du premier organe tubulaire extérieur,

on obtient une orientation angulaire déterminée précise dans l'espace du second organe tubulaire, la section générale des organes tubulaires pouvant cependant être circulaire ce qui facilite la construction à tous les points de vue,

on peut alimenter électriquement et/ou pneumatiquement les moyens de commande à l'extrémité du deuxième organe tubulaire en conservant, bien protégées à l'intérieur des organes tubulaires, les conduites souples,

on peut faire tourner de l'angle désiré le dispositif, le système des paliers et pistes plates formés sur les tubes permettant de commander précisément la position angulaire dans l'espace du deuxième organe tubulaire par rapport au support pris comme élément de référence. Dans une telle conception, l'alimentation par conduite souple passant à l'intérieur du dispositif peut être conservée en prévoyant simplement à la base, d'enrouler de façon lâche en hélice, sur deux ou trois tours environ, les conduites d'alimentation autour du premier organe tubulaire. Les mouvements de rotation imprimés au dispositif télescopique entraîneront dans ces conditions une simple modification du diamètre d'enroulement rattrapant la différence de longueur due à l'orientation angulaire variable du bras de commande constitué par les deux organes tubulaires télescopiques.

Selon un mode de réalisation préféré, lesdits moyens de commande moteurs du dispositif comprennent un câble, une courroie ou analogue dont un brin est tendu parallèlement à l'axe médian desdits organes tubulaires et est déplaçable alternativement en étant relié en au moins un point à l'un desdits organes tubulaires.

De la même façon et de préférence, lesdits moyens de couplage desdits organes tubulaires comprennent un câble ou une courroie tendu en formant deux brins entre deux poulies ou engrenages montés sur ledit premier organe tubulaire et s'étendant sur sensiblement toute sa longueur, un brin dudit câble ou de ladite courroie étant fixé à un point dudit deuxième organe tubulaire et l'autre brin étant fixé en un point fixe du support du dispositif.

De préférence, ledit deuxième organe tubulaire est monté coulissant à l'intérieur du premier.

Avec de telles caractéristiques de montage, il devient aisé de réaliser un dispositif télescopique dont la course 2d peut être commandée de façon précise à partir d'une commande de course d positive du premier organe tubulaire extérieur, aussi bien en extension qu'en rétraction.

L'invention et sa mise en œuvre apparaîtront plus clairement à l'aide de la description qui va suivre faite en référence aux dessins annexés dans lesquels :

la figure 1 montre en vue schématique et en élévation les éléments essentiels d'un dispositif de transfert télescopique conçu selon l'invention,

les figures 2 et 3 sont des vues en coupe faites respectivement au niveau des plans II-II et III-III de la figure 1 à travers le dispositif de transfert, le support étant supposé enlevé,

la figure 4 montre à plus petite échelle, comme la figure 1, le montage des conduites d'alimentation des moyens de commande électriques et/ou pneumatiques équipant le robot et associés à ce bras télescopique ;

les figures 5 et 6 montrent schématiquement le principe du mouvement de transfert du bras télescopique ;

les figures 7 et 8 montrent schématiquement le principe de guidage des conduites d'alimentation passant à l'intérieur du bras télescopique.

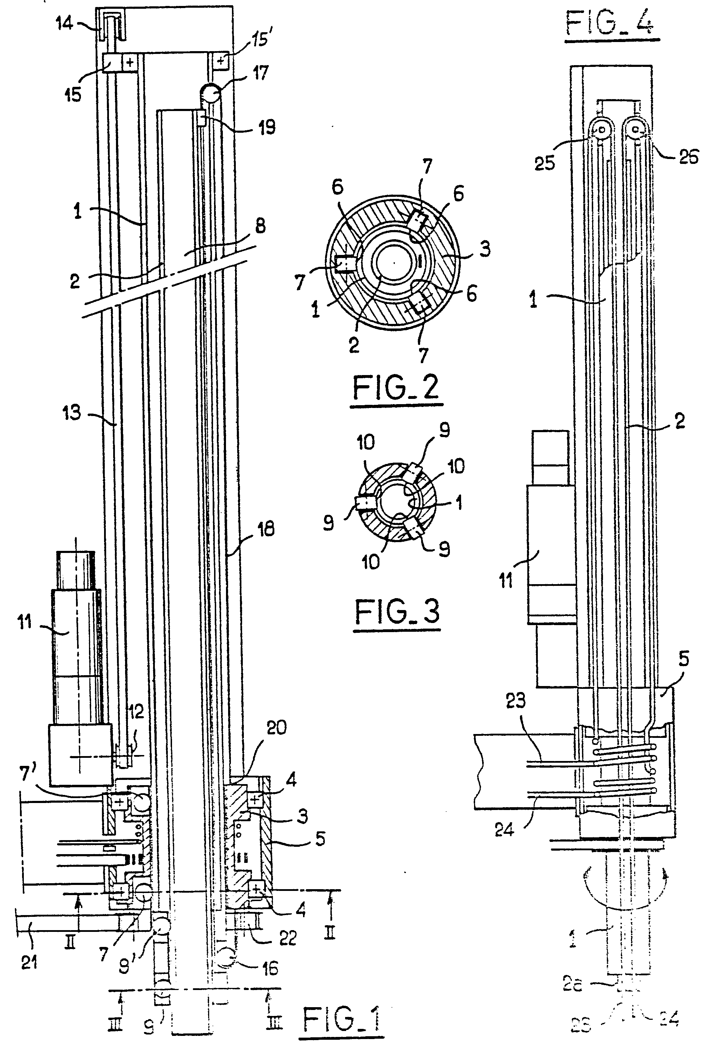

En se reportant tout d'abord aux figures 1 à 3, on voit que le dispositif de transfert télescopique comprend essentiellement deux organes tubulaires coulissant télescopiquement l'un dans l'autre respectivement 1 et 2. Dans l'exemple de réalisation préféré illustré, ces organes sont constitués par des tubes à section générale circulaire, ce qui est le plus pratique au niveau de la fabrication et donne la plus grande résistance sous le plus faible volume.

L'ensemble des tubes 1 et 2 est monté à l'intérieur d'un moyeu 3 lui-même supporté par des galets ou roulements 4 qui permettent sa rotation dans un support 5 du dispositif. Dans ce qui suivra, on supposera que le support est « fixe », et l'on appellera « base » la partie basse voisine du support 5 dans la position illustrée à la figure 1 et « sommet » la partie opposée située vers la partie haute de la figure. Il est bien entendu cependant que le support 5 « fixe » peut parfaitement être mobile à l'intérieur d'un dispositif plus complexe formant robot et qu'il n'est dénommé « fixe » que par matière de référence.

Pour réaliser le guidage à coulissement du tube 1 dans le moyeu 3, on a formé, comme il apparaît plus clairement à la figure 2, trois méplats 6 formant des pistes rectilignes orientées à 120° l'une de l'autre sur la paroi périphérique du tube 1. Sur ces pistes 6 viennent rouler deux jeux de trois galets 7, 7' assurant un parfait guidage rectiligne parallèle à l'axe 8 du dispositif du tube 1 dans le moyeu support 3. Le montage peut être parfait en prévoyant par exemple sur les deux galets 7, 7' visibles à la figure 1 des moyens élastiques de rattrapage de jeu tels que des rondelles élastiques (non représentées) venant presser ces galets contre les pistes 6 en regard.

Le montage télescopique et le guidage du tube interne 2 à l'intérieur du tube 1 se fait de façon analogue au moyen de galets 9, 9' montés à la base du tube externe 1 et venant rouler sur trois pistes 10 formées par des méplats rectilignes orientées à 120° sur la périphérie du tube interne 2. Un rattrapage élastique du montage peut être prévu également pour deux galets 9, 9'.

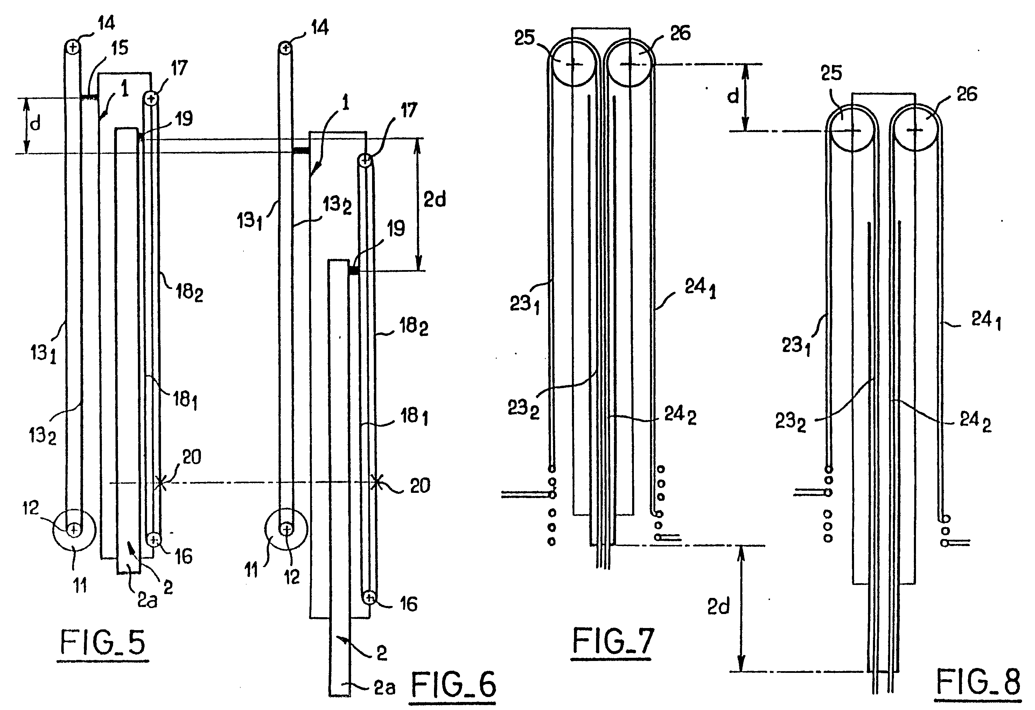

Pour l'entraînement en mouvement du dispositif, il est prévu des moyens de commande moteurs comprenant un moteur hydraulique ou électrique 11, par exemple du type à entraînement pas à pas. Le moteur 11 fait tourner de l'angle précis déterminé voulu une poulie 12 qui est avantageusement du type crantée pour l'entraînement précis d'une courroie plate crantée 13 enroulée autour de la poulie 12 et d'une poulie de renvoi 14 montée tournant folle à l'extrémité haute fixe du dispositif. Comme il apparaît plus clairement sur le schéma de principe de fonctionnement des figures 5 et 6, la courroie 13 a ses deux brins $13_1$, $13_2$ tendus entre les poulies 12 et 14, et l'un des brins $13_2$ est fixé en 15 vers l'extrémité supérieure du tube 1.

D'autre part, le tube 1 extérieur porte deux poulies 16, 17 qui sont avantageusement du même type que les poulies 12 et 14 et sur lesquelles est tendue une courroie 18. Comme il apparaît notamment des figures 1 et 5, la courroie 18, avantageusement du type courroie plate crantée, est fixée en 19 vers l'extrémité haute du tube 2 et en 20 au moyeu fixe 3. Les poulies 16 et 17 sont montées tournant folles.

On décrira maintenant, en faisant plus particulièrement référence aux figures 5 et 6, les fonctions de déplacement du bras télescopique.

Lorsqu'on veut déplacer l'extrémité 2a du bras télescopique 2 d'une certaine distance, on commande l'entraînement du moteur 12. Lorsqu'on commande l'entraînement du moteur 12, de façon à entraîner la courroie 13 sur un certain parcours d, le tube 1 est entraîné de cette même distance d, puisque le brin $13_2$ de la courroie 13 est fixé en 15 au tube 1 par un palier 15' autorisant la rotation du tube 1 sur lui-même.

Simultanément, l'ensemble de la courroie 18 et de ses poulies de renvoi 16, 17 est entraîné de la même distance d que le tube 1 sur lequel les poulies 16, 17 sont montées. Le brin $18_2$ de la courroie 18 étant fixé en 20 au support fixe du moyeu 3, les brins de la courroie 18 se déroulent et s'enroulent de chaque côté de la même distance d. Le brin $18_1$ étant solidaire en 19 du tube interne 2, cela fait que le tube 2 est entraîné sur une distance strictement égale à d par rapport au tube 1 et dans le même sens que lui. En définitive, le tube 2 avance donc de la distance 2d dans la direction de déplacement commandée (par rapport aux supports 3, 5 supposés fixes).

Du fait que le moyeu 3 est monté dans des paliers 4 en rotation dans le support fixe 5, il est en outre possible de faire tourner l'ensemble des tubes télescopiques 1 et 2 avec le moyeu 3 à l'intérieur du support 5. Cette rotation d'un angle déterminé peut être commandée par exemple par une courroie crantée 21 montée sur une poulie crantée 22 solidaire du moyeu 3. On note que compte tenu de la prévision des méplats 6, 10 formés sur les tubes 1 et 2 respectivement et du fait des galets 7, 9 qui viennent presser sur ces pistes, on obtient un verrouillage en rotation du tube interne 2 par rapport au moyeu 3, d'où la possibilité de commande positive en rotation de la tête 2a du bras télescopique autour de l'axe 8 du dispositif.

On décrira maintenant, en faisant référence aux figures 4, 7 et 8, l'alimentation électrique et/ou pneumatique des moyens de commande portés par la tête 2a du bras. Ces moyens de commande peuvent actionner par exemple une tête de préhension, ou encore fournir les informations de commande et de contrôle à un autre bras éventuellement télescopique lui-même monté supporté à l'extrémité 2a du dispositif.

Selon le mode de réalisation illustré, on a supposé que la tête 2a du bras télescopique devait recevoir une information pneumatique par une conduite 23 et une information électrique par une conduite 24. Selon l'invention, ces conduites peuvent être montées essentiellement à l'intérieur du bras en utilisant des conduites souples genre tubes fins par exemple de quelques millimètres de diamètre.

Les conduites 23, 24 arrivent au niveau du support fixe 5 en étant enroulées sur deux à trois tours de façon souple à la base du tube externe 1. Ensuite, les conduites sont tendues contre la paroi externe du tube 1 jusque vers la partie supérieure du tube où elles s'enroulent autour de deux poulies 25, 26 fixées au tube 1 et redescendent ensuite à l'intérieur du tube interne 2 pour venir ressortir à l'extrémité de la tête 2a du tube.

Comme il apparaît plus clairement aux figures 7 et 8, lorsque le tube 1 est entraîné sur une distance d, et par conséquent le tube 2 sur une distance 2d (par rapport au support supposé fixe 5), on voit que lorsque le brin externe $23_1$, $24_1$ des conduites 23, 24 se raccourcissent de la distance d en s'enroulant autour des poulies 25, 26, les brins $23_2$, $24_2$ internes s'allongent de la distance correspondante. Les conduites restent donc tendues correctement et l'on n'a pas de conduite de commande venant traîner à l'extérieur du bras télescopique.

D'autre part, compte tenu des deux à trois spires lâches d'enroulement à la base des conduites autour du tube 1, une commande en rotation, par exemple sur un tour de la tête 2a, est possible par simple resserrement ou relâchement du diamètre des spires enroulées à la base du dispositif.

Bien entendu l'invention n'est nullement limitée au mode de réalisation illustré et décrit qui n'a été donné qu'à titre d'exemple. En particulier, il est possible de monter les tubes non pas télescopiquement l'un dans l'autre, mais extérieurement l'un à l'autre quoique le montage interne soit en général préféré. De même, pour réaliser les entraînements, au lieu d'utiliser des courroies plates et crantées engrenant avec des engrenages correspondants, on peut utiliser d'autres types de courroies et poulies, par exemple à gorge trapézoïdale, ou encore des engrenages qui peuvent réaliser les mêmes entraînements relatifs.

**Revendications**

1. Dispositif de transfert télescopique en particulier pour robots industriels, comprenant au moins deux organes tubulaires (1, 2) coulissant télescopiquement l'un par rapport à l'autre, des moyens de commande moteurs du dispositif comprenant au moins un moteur (11) servant à commander le mouvement alternatif de déplacement, parallèlement à l'axe médian (8) desdits organes tubulaires, dans un sens ou dans l'autre, de l'un desdits organes (1) et des moyens tels que poulies, courroies, câbles, engrenages (16, 17, 18) montés libres ou fous, reliés en un point fixe (20) du support (3, 5) du dispositif, assurant le couplage desdits organes tubulaires (1, 2) entre eux de façon que lorsque le premier organe (1) est entraîné par le moteur (11) précité sur une distance d par rapport audit support fixe, ledit second organe (2) est entraîné dans la même direction d'une même distance d par rapport audit premier organe, ledit deuxième organe télescopique (2) coulissant à l'intérieur du premier organe télescoptique (1) en étant guidé au moyen de galets (9) montés à l'intérieur du premier organe télescopique et roulant sur des pistes (10), ledit dispositif étant caractérisé en ce que :

les pistes sont formées par des méplats ménagés sur la paroi extérieure dudit deuxième organe tubulaire (2),

ladite commande du mouvement de déplacement se fait de manière positive dans un sens et dans l'autre ;

les moyens de commande électrique et/ou pneumatique commandés à partir de l'extrémité (2a) dudit deuxième organe tubulaire (2) sont alimentés par des conduites souples (23, 24) passant à l'intérieur dudit deuxième organe tubulaire (2) et à l'extérieur dudit premier organe tubulaire (1) en étant fixées en leur point d'alimentation au support (5) du dispositif vers sa base et en passant à l'autre extrémité dudit premier organe tubulaire (1) sur des poulies de renvoi ou analogues (25, 26) ;

et ledit premier organe tubulaire (1) est monté tournant dans des paliers (4) de rotation liés audit support (5).

2. Dispositif selon la revendication 1, caractérisé en ce que lesdites conduites souples (23, 24) sont enroulées lâches en hélice sur deux ou trois tours environ à leur base d'alimentation autour dudit premier organe tubulaire (1).

3. Dispositif selon les revendications 1 ou 2, caractérisé en ce que ledit premier organe tubulaire (1) est relié par un palier de rotation (15') à la pièce (15) de commande en translation dudit organe tubulaire (1) par la commande d'entraînement moteur (12, 13).

4. Dispositif selon l'une des revendications précédentes caractérisé en ce que lesdits moyens de commande moteurs du dispositif comprennent un câble, une courroie ou analogue (13) dont un brin est tendu parallèlement à l'axe médian (8) desdits organes tubulaires et déplaçable alternativement en étant relié en au moins un point (15) à l'un (1) desdits organes tubulaires.

5. Dispositif selon l'une des revendications précédentes caractérisé en ce que lesdits moyens de couplage desdits organes tubulaires (1, 2) comprennent un câble ou une courroie (18) tendu en formant deux brins entre deux poulies ou engrenages (16, 17) montés sur ledit premier organe tubulaire (1) et s'étendant sur sensiblement toute sa longueur, un brin dudit câble ou de ladite courroie étant fixé à un point (19) dudit deuxième organe tubulaire (2) et l'autre brin étant fixé en un point fixe (20) du support.

6. Dispositif selon les revendications 4 et 5, caractérisé en ce que lesdites courroies (13, 18) sont des courroies crantées s'enroulant sur des poulies crantées (12, 14, 16, 17) en correspondance.

7. Dispositif selon l'une des revendications précédentes caractérisé en ce que trois pistes (10) orientées à 120° l'une de l'autre autour du deuxième organe tubulaire (2) sont prévues sur lesquelles roulent trois jeux de galets (9) de guidage précité.

8. Dispositif selon la revendication 7, caractérisé en ce que deux jeux de galets (9) sont prévus dans ledit premier organe tubulaire (1) espacés d'une certaine distance parallèlement à l'axe médian (8) du dispositif.

9. Dispositif selon l'une des revendications précédentes caractérisé en ce que ledit premier organe tubulaire (1) est guidé à l'intérieur du support fixe (3) du dispositif par des moyens à pistes (6) formées sur la périphérie dudit premier organe tubulaire (1) et galets (7) montés dans ledit support (3) analogues aux moyens de guidage du coulissement dudit second organe tubulaire (2) dans ledit premier organe tubulaire.

10. Dispositif selon l'une des revendications précédentes caractérisé en ce que des moyens sont prévus pour presser élastiquement certains au moins desdits galets de guidage (7, 9) contre lesdites pistes (6, 10).

**Claims**

1. Telescopic transfer device particularly for industrial robots, comprising at least two tubular members (1, 2) sliding telescopically one in relation to the other, motor operating means for driving the device and comprising at least one motor (11) serving to control the alternating movement of displacement parallel with the median axis (8) of the said tubular members in one direction or the other, of one of the said members (1) and means such as pulleys, belts, cables, gears (16, 17, 18) mounted to be free or idling, connected at a fixed point (20) of the support (3, 5) of the device, ensuring coupling of the said tubular members (1, 2) inter se so that when the first member (1) is driven by the aforesaid motor (11) over a distance d in relation to the fixed support, the said second member (2) is then trained in the same direction by a same distance d in relation to the said first member, the said second telescopic member (2) sliding within the first telescopic member (1) and being guided by rollers (9) mounted inside the first telescopic member and rolling on tracks (10), the said device being characterised in that :

the tracks are formed by flats provided on the outer wall of the said second tubular member (2) ;

the said control of the displacement movement is carried out positively in one direction and in the other ;

the electrical and/or pneumatic control means operated from the end (2a) of the said second tubular member (2) are supplied by flexible ducts (23, 24) passing through the interior of the said second tubular member (2) and on the outside of the said first tubular member (1) while being fixed at their supply point to the support (5) of the device, towards the bottom thereof, and parting to the other end of the said first tubular member (1) on return pulleys or the like (25, 26) ;

and the said first tubular member (1) is mounted to rotate in rotary bearings (4) connected to the said support (5).

2. Device according to Claim 1, characterised in that the said flexible ducts (23, 24) are rolled up slack in a helical arrangement over two or three turns approximately at their base of supply around the said first tubular member (1).

3. Device according to Claims 1 or 2, characterised in that the said first tubular member (1) is connected by a rotary bearing (15') to the member (15) for controlling translatory movements of the said tubular member (1) by the motor drive control (12, 13).

4. Device according to one of the preceding Claims, characterised in that the said motor control means of the device comprise a cable, a belt or the like (13) of which one strand is maintained taut parallel with the median axis (8) of the said tubular members and adapted for alternate displacement while being connected to one (1) of the said tubular members at least at one point (15).

5. Device according to one of the preceding Claims, characterised in that the said coupling means of the said tubular members (1, 2) comprise a cable or a belt (18) which is kept taut, forming two strands between two pulleys or gears (16, 17) mounted on the said first tubular member (1) and extending over substantially all its length, one strand of the said cable or the said belt being fixed at a point (19) on the said second tubular member (2) while the other strand is fixed to a fixed point (20) of the support.

6. Device according to Claims 4 and 5, characterised in that the said belts (13, 18) are notched belts which roll on pulleys (12, 14, 16, 17) which are notched accordingly.

7. Device according to one of the preceding Claims, characterised in that three tracks (10) orientated at 120 degrees in respect of one another around the second tubular member (2) are provided on which roll three sets of aforesaid drive rollers (9).

8. Device according to Claim 7, characterised in that two sets of rollers (9) are provided in the said first tubular member (1) which are spaced apart by a certain distance parallel with the median axis (8) of the device.

9. Device according to one of the preceding Claims, characterised in that the said first tubular member (1) is guided inside the fixed support (3) of the device by track means (6) formed on the periphery of the said first tubular member (1) and rollers (9) mounted in the said support (3) similar to the sliding drive means of the said second tubular member (2) in the said first tubular member.

10. Device according to one of the preceding Claims, characterised in that means are provided for elastically pressing at least certain of the said guide rollers (7, 9) against the said tracks (6, 10).

**Patentansprüche**

1. Teleskopische Bewegungsübertragungsvorrichtung, insbesondere für Industrieroboter, umfassend mindestens zwei rohrförmige, teleskopisch zueinander verschiebbare Teile (1, 2), motorische Antriebsmittel der Vorrichtung, umfassend mindestens einen Motor (11), der dem Antrieb zur abwechselnden Lageveränderungsbewegung der erwähnten rohrförmigen Teile parallel zur Mittelachse (8) in der einen und anderen Richtung eines der genannten Teile (1), dient, sowie Mittel wie Rollen oder Scheiben, Riemen, Seile, Getriebe (16, 17, 18), die frei oder lose gelagert und in einem festen Punkt (20) des Stützlagers (3, 5) der Vorrichtung verbunden sind sowie die Kopplung der genannten rohrförmigen Teile (1, 2) miteinander derart sichern, daß beim Antrieb des ersten Teils (1) durch den vorerwähnten Motor (11) um eine Strecke d relativ zum erwähnten festen Stützlager das erwähnte zweite Teil (2) um eine gleiche Strecke d relativ zu dem erwähnten ersten Teil bewegt wird, wobei das erwähnte zweite Teleskopteil (2) im Inneren des ersten Teleskopteils (1) läuft, indem es mittels Rollen (9), die im Inneren des ersten Teleskopteils gelagert sind und auf Bahnen (10) laufen, geführt ist, dadurch gekennzeichnet, daß

die Bahnen von Abflachungen gebildet sind, die auf der Außenwand des erwähnten zweiten rohrförmigen Teils (2) angeordnet sind ;

der gesagte Antrieb der Lageveränderungsbewegung in der einen und der anderen Richtung positiv (formschlüssig) erfolgt ;

die elektrischen und/oder pneumatischen Antriebsmittel, die von dem Ende (2a) des erwähnten zweiten rohrförmigen Teils (2) her angetrieben werden, durch biegsame Leitungen (23, 24) versorgt werden, die durch das Innere des erwähnten zweiten rohrförmigen Teils und am Äußeren des erwähnten ersten rohrförmigen Teils (1) verlaufen, wobei sie mit ihrer Zuführungsstelle am Stützlager (5) der Vorrichtung in Richtung auf deren Basis befestigt sind und am anderen Ende des erwähnten ersten rohrförmigen Teils (1) über Umlenkscheiben o. ä. (25, 26) verlaufen ;

und das erwähnte erste rohrförmige Teil (1) drehbar in Drehlagern (4) gelagert ist, die mit dem Stützlager (5) verbunden sind.

2. Vorrichtung nach Anspruch 1, dadurch gekennzeichnet, daß die erwähnten biegsamen Leitungen (23, 24) mit zwei oder drei Windungen lose als Schraubenwendel ungefähr an ihrer Zuführbasis um das erwähnte erste rohrförmige Teil (1) gewickelt sind.

3. Vorrichtung nach den Ansprüchen 1 oder 2, dadurch gekennzeichnet, daß das erwähnte erste rohrförmige Teil (1) mittels eines Drehlagers (15') mit dem Teil (15) für den Längsantrieb des erwähnten rohrförmigen Teils (1) durch den motorischen Bewegungsantrieb (12, 13) verbunden ist.

4. Vorrichtung nach einem der vorangehenden Ansprüche, dadurch gekennzeichnet, daß die erwähnten motorischen Antriebsmittel der Vorrichtung ein Seil, einen Riemen od. dgl. (13) umfassen, dessen einer Trum parallel zur Mittelachse (8) der erwähnten rohrförmigen Teile gespannt und wahlweise verschiebbar ist, wobei er in mindestens einem Punkt (15) mit einem der erwähnten rohrförmigen Teile (1) verbunden ist.

5. Vorrichtung nach einem der vorangehenden Ansprüche, dadurch gekennzeichnet, daß die erwähnten Kopplungsmittel der erwähnten rohrförmigen Teile (1, 2) ein gespanntes Seil oder einen gespannten Riemen (18) unter Bildung von zwei Trums zwischen zwei Scheiben oder Trieben (16, 17) umfassen, die auf dem erwähnten ersten rohrförmigen Teil (1) gelagert sind und sich im wesentlichen über dessen gesamte Länge erstrecken, wobei ein Trum des erwähnten Seils oder des erwähnten Riemens an einer Stelle (19) des erwähnten zweiten rohrförmigen Teils (2) befestigt ist und der andere Trum an einem festen Punkt (20) der Stütze befestigt ist.

6. Vorrichtung nach den Ansprüchen 4 und 5, dadurch gekennzeichnet, daß die erwähnten Riemen (13, 14) Zahnriemen sind, die über entsprechende Zahnscheiben (12, 14, 16, 17) laufen.

7. Vorrichtung nach einem der vorangehenden Ansprüche, dadurch gekennzeichnet, daß drei zueinander jeweils um 120° versetzt um das zweite rohrförmige Teil angeordnete Bahnen (10) vorgesehen sind, auf denen drei Rollensätze (9) zur vorerwähnten Führung laufen.

8. Vorrichtung nach Anspruch 7, dadurch gekennzeichnet, daß zwei Rollensätze (9) in dem erwähnten ersten rohrförmigen Teil um einem bestimmten Abstand parallel zur Mittelachse (8) der Vorrichtung beabstandet vorgesehen sind.

9. Vorrichtung nach einem der vorangehenden Ansprüche, dadurch gekennzeichnet, daß das erwähnte erste rohrförmige Teil (1) im Inneren der festen Stütze (3) der Vorrichtung durch Bahnmittel (6), die auf dem Umfang des erwähnten ersten rohrförmigen Teils (1) ausgebildet sind, und Rollenmittel (7) geführt ist, die in der erwähnten Stütze (3) ähnlich den Führungsmitteln der Verschiebebewegung des erwähnten zweiten rohrförmigen Teils (2) in dem erwähnten ersten rohrförmigen Teil gelagert sind.

10. Vorrichtung nach einem der vorangehenden Ansprüche, dadurch gekennzeichnet, daß Mittel vorgesehen sind, um wenigstens bestimmte der erwähnten Führungsrollen (7, 9) gegen die erwähnten Bahnen (6, 10) elastisch anzudrücken.

0 097 562

FIG_4

FIG_2

FIG_3

FIG_1

FIG_5    FIG_6    FIG_7    FIG_8

0 097 562